# EUROPÄISCHE PATENTSCHRIFT

(11) **EP 4 121 303 B1**
(45) Veröffentlichungstag und Bekanntmachung des Hinweises auf die Patenterteilung: **01.05.2024**
(21) Anmeldenummer: 20820867.8
(22) Anmeldetag: 07.12.2020
(51) Int. Cl.: B60C 11/03, B60C 11/13, B60C 11/04

(54) **LAUFSTREIFENPROFIL EINES FAHRZEUGREIFENS**
TREAD PROFILE OF A VEHICLE TYRE
SCULPTURE DE BANDE DE ROULEMENT DE PNEU DE VÉHICULE

(30) Priorität: 17.03.2020 DE 102020203381
(43) Veröffentlichungstag der Anmeldung: 25.01.2023
(73) Patentinhaber: Continental Reifen Deutschland GmbH, 30175 Hannover (DE)
(72) Erfinder: KRISTEN, Florian, 30165 Hannover (DE); LUTZ, André, 30165 Hannover (DE)
(74) Vertreter: Continental Corporation
(86) Internationale Anmeldenummer: PCT/EP2020/084811
(87) Internationale Veröffentlichungsnummer: WO 2021/185474

(56) Entgegenhaltungen:
- EP-A1- 2 722 199
- DE-A1- 1 505 020
- JP-A- H03 135 804
- JP-A- 2012 218 472

## Beschreibung

Die Erfindung betrifft ein Laufstreifenprofil eines Fahrzeugreifens mit durch Rillen voneinander getrennten Profilelementen, wobei die durch eine Rille getrennten Profilelemente in radialer Richtung nach außen hin durch eine die Bodenkontaktfläche bildende radial äußere Oberfläche und zur Rille hin jeweils durch eine eine Rillenwand bildende Profileelementflanke begrenzt werden und wobei die Rillen in radialer Richtung nach innen hin durch einen Rillengrund und beiderseits des Rillengrundes jeweils durch eine Rillenwand begrenzt werden, welche sich in radialer Richtung ausgehend vom Rillengrund bis zur radial äußeren Oberfläche des von ihr begrenzten Profilelementes erstreckt, wobei in den die Rille begrenzenden, jeweils eine andere Rillenwand der Rille bildenden Profilelementflanken jeweils eine in Erstreckungsrichtung der Rille erstreckte Gummirippe ausgebildet ist.

Derartige Fahrzeugluftreifen sind bekannt. Die Laufstreifenprofile von Fahrzeugluftreifen werden mit von Profilelementen begrenzten Rillen ausgebildet. Es ist dabei bekannt, Nutzfahrzeugreifen mit Umfangsrillen auszubilden, welche durch Profilrippen oder durch Profilblockreihen begrenzt sind, wobei die Profilblockreihen aus durch Querrillen begrenzten Profilblockelementen ausgebildet sind.

Die Rillen ermöglichen dabei die Aufnahme und die Ableitung von Wasser und Matsch beim Abrollen auf der Straßenoberfläche. Gerade bei Nutzfahrzeugreifen ermöglichen die Rillen dabei auch die Aufnahme von Steinen und Geröll und anderen Fremdpartikeln, welche bis in den Rillengrund eindringen können. Dabei besteht auch die Möglichkeit, dass derartige Fremdpartikel in das Gummimaterial in den Rillengrundbereich eindringen können. Daher ist es wünschenswert, insbesondere bei Einsatz derartiger Fahrzeugluftreifen mit erhöhtem Steinfangrisiken, das Eindringen von Steinen möglichst zu vermeiden. Hierdurch kann die Beschädigung des Rillengrundes und ein mögliches Eindringen der Fremdkörper bis in den Gürtelbereich vermieden werden.

Beispielsweise aus der US 26 61 041 A ist es bekannt, in beiden Rillenwänden einer Rille in gleicher identischer Höhenposition, jedoch in Rillenerstreckungsrichtung in alternierender Abfolge hintereinander zylindrische Erhebungen auszubilden, die sich jeweils von der einen Rillenwand in Richtung zur anderen hin erstrecken, jedoch im Abstand von der anderen Rillenwand enden. Die Ausbildung kann dabei in begrenztem Umfang das Eindringen von Steinen behindern, allerdings ist zwischen den in alternierender Abfolge ausgebildeten zylindrischen Erhebungen noch ausreichend offener mit offenem Zugang zum Rillengrund, der es ermöglicht, dass dennoch auch größere Fremdkörper eindringen können. Ebenso kann zwischen den zylindrischen Erhebungen und der gegenüberliegenden Wand ein Eindringen von Fremdkörpern nicht vermieden werden.

Aus der US 9,033,013 B2 ist es bekannt, Rippen oder rippenförmige Abschnitte in beiden, eine Rille begrenzenden Rillenwänden jeweils in gleicher Höhenposition auszubilden. Auch bei dieser Ausbildung ist ausreichend Platz mit freiem Durchgang zum Rillengrund zwischen den in gleicher Höhe positionierten Rippen bzw. rippenförmigen Abschnitten und auch in den Abschnitten außerhalb dieser Rippen oder rippenförmigen Abschnitte, so dass ein einfaches Eindringen von Fremdkörpern auch hier noch möglich ist. Durch die Ausbildung der rippenförmigen Ausschnitte in beiden Rillenwänden im gleichen Erstreckungsabschnitt ist ein Einsatz derartiger Ausbildung auch lediglich bei sehr breiten Rillen möglich. Eine wirksame Ausbildung bei schmalen Rillen ist mit den bekannten Ausbildungen kaum umsetzbar.

Aus der DE1505020A1 ist es bekannt, in Umfangsrillen, welche Umfangsrippen begrenzen, wechselweise Erstreckungsabschnitte der Umfangsrillen mit in den Rillenwänden in radialer Richtung des Reifens übereinander angeordneten rippenförmigen Abschnitten auszubilden. Dabei ist in einem Erstreckungsabschnitt der Rille der oberhalb angeordnete rippenförmige Abschnitt in der einen Rillenwand und der unterhalb angeordnete in der anderen Rillenwand ausgebildet und in einem anschließenden Erstreckungsabschnitt genau entgegengesetzt der oberhalb angeordnete in der anderen Wand und der unterhalb angeordnete in der einen Rillenwand. Auch diese in Erstreckungsrichtung der Rille alternierende Abfolge von übereinander angeordneten rippenförmigen Abschnitten bewirkt lediglich, dass zwei rippenförmige Abschnitte in einzelnen Umfangserstreckungsabschnitten des Reifens Wirkung zeigen könnten. In den Abschnitten des Übergangs der hintereinander abfolgend angeordneten Rippenabschnitte sind jedoch Abschnitte mit offenem Durchgang bis zum Rillengrund hin gegeben, die es ermöglichen, dass Steine und sonstige Fremdpartikel einfach eindringen und bis zum Rillengrund hindurch gelangen können. Zusätzlich sind derartige in den Bereich des Rillengrundes eingedrungene Steine und Fremdartikel dann durch die benachbarten Abschnitte an einem Verlassen des Reifenprofiles gehindert, so dass bei derartigen Ausbildungen die Fremdkörper regelrecht im unteren Bereich des Rillengrundes gefangen sind und hierdurch der Rillengrund beschädigt werden kann.

**Aus der** JP H03 135804 A **ist es bekannt, in einem Laufstreifen eines Fahrzeugreifens eine Rille auszubilden, die in einem ersten vom Rillengrund bis weit nach außen nahe der radial äußeren Oberfläche der Profilelemente reichenden radialen Erstreckungsabschnitt schmal ausgebildet ist. Im radial äußeren Erstreckungsabschnitt der Profilrille ist eine erste Rillenwand sprungartig nach außen versetzt ausgebildet und die Rille hierdurch verbreitert. Radial außerhalb dieses Versatzes ist in der zweiten Rillenwand eine Rippe ausgebildet, die sich in einzelnen Erstreckungsabschnitten der Rille zur Rille hin in Richtung zur ersten Rillenwand bis über die durch den sprungartigen Versatz gebildete Stufe der ersten Rillenwand erstreckt.**

Der Erfindung liegt daher die Aufgabe zugrunde, ein Laufstreifenprofil eines Fahrzeugreifens - insbesondere für den Einsatz bei Nutzfahrzeugen oder Vanfahrzeugen - zu ermöglichen, bei dem benachbarte, durch Rillen voneinander getrennte erhabene Profilelemente ausgebildet sind, die es ermöglichen ausreichend Wasser aufzunehmen, abzuleiten und über die gesamte Profilelementerstreckung hinweg einen besseren Schutz gegen Eindringen von Steinen bis zum Rillengrund zu ermöglichen.

Die Aufgabe wird erfindungsgemäß durch die Ausbildung eines Laufstreifenprofils eines Fahrzeugreifens mit durch Rillen voneinander getrennten Profilelementen, wobei die durch eine Rille getrennten Profilelemente in radialer Richtung nach außen hin durch eine die Bodenkontaktfläche bildende radial äußere Oberfläche und zur Rille hin jeweils durch eine eine Rillenwand bildende Profilelementflanke begrenzt werden und wobei die Rillen in radialer Richtung nach innen hin durch einen Rillengrund und beiderseits des Rillengrundes jeweils durch eine Rillenwand begrenzt wird, welche sich in radialer Richtung ausgehend vom Rillengrund bis zur radial äußeren Oberfläche des von ihr begrenzten Profilelementes erstreckt, wobei in den die Rille begrenzenden, jeweils eine andere Rillenwand der Rille bildenden Profilelementflanken jeweils eine in Erstreckungsrichtung der Rille erstreckte Gummirippe ausgebildet ist, gemäß den Merkmalen von Anspruch 1 gelöst, bei dem die in der einen Rillenwand gebildete Gummirippe in anderer radialer Position des Fahrzeugreifens ausgebildet ist als die in der anderen Rillenwand ausgebildete Gummirippe, wobei die beiden Gummirippen sich jeweils über die gesamte Erstreckungslänge der Profilelementflanke erstrecken und wobei jede dieser beiden Gummirippen jeweils längs ihrer gesamten Erstreckungslänge von derjenigen Profilelementflanke, in welcher sie ausgebildet ist, in die Rille hinein in Richtung zur anderen Profilelementflanke bis mindestens zur Mitte der Rillenbreite in dieser radialen Position der Rille erstreckt und dort, in der Rille mit Abstand zu den Profilelementflanken endet.

Durch diese Ausbildung wird ermöglicht, dass längs der gesamten Erstreckung des die Rille begrenzenden Profilelementes die beiden in den Rillenwänden ausgebildeten Gummirippen übereinander positioniert ausgebildet und dabei in ihrer Erstreckungsrichtung zum jeweils gegenüberliegenden, die Rille begrenzenden Profilelement bis in eine Position erstreckt sind, dass eine Überlappung mit der jeweils anderen Gummirippe erfolgt. Auf diese Weise ist längs der gesamten Erstreckung des Profilelementes eine Art Labyrinth-Dichtung innerhalb der Rille geschaffen, die es ermöglicht, ein Eindringen von Steinen oder sonstigen spitzen Fremdkörpern weitgehend zu verhindern und dennoch den Rillencharakter zur Aufnahme von Wasser und zur Ableitung von Wasser aufrecht zu erhalten, **wobei die Rille mit einer in radialer Richtung ausgehend vom Rillengrund bis zur radial äußeren Oberfläche der angrenzenden Profilelemente gemessenen Rillentiefe T ausgebildet ist und die beiden Gummirippen innerhalb eines ausgehend vom Rillengrund nach radial außen hin gemessenen radialen Erstreckungsbereiches der Erstreckungshöhe H₁ =T/2 ausgebildet sind**.. Somit kann auf diese Weise eine hohe Sicherheit gegen Eindringen von Fremdkörpern bei gleichzeitiger Aufrechterhaltung der Aufnahme und Ableitung von Wasser mit einfachen Mitteln umgesetzt werden und dies auch bei sehr schmalen Rillen. Dabei kann in einfacher Weise sichergestellt werden, dass die Rille in radialer Richtung außerhalb der Gummirippen soweit schließen kann, dass ein Eindringen von Steinen minimiert wird.

In dieser Weise können auch besonders anfällige Nutzfahrzeugreifen und Vanreifen in einfacher Weise zuverlässig gegen Eindringen von Steinen gerüstet werden.

Besonders vorteilhaft ist die Ausbildung eines Laufstreifenprofils gemäß den Merkmalen von Anspruch **2**, wobei die beiden Gummirippen jeweils in einer radialen Position außerhalb einer ausgehend vom Rillengrund nach radial außen hin gemessenen Höhe H₂ = 3mm ausgebildet sind. Hierdurch kann in einfacher Weise sichergestellt werden, dass bei der Verformung des Reifens durch die Gummirippen entstehende Spannungsspitzen in ausreichend großem Abstand zum Rillengrund entstehen. Die Möglichkeit der Entstehung von Groove Cracks kann hierdurch zusätzlich minimiert werden.

Besonders vorteilhaft zur einfachen Ausformung beim Reifenbauprozess ist die Ausbildung eines Laufstreifenprofils gemäß den Merkmalen von Anspruch **3,** wobei die beiden Gummirippen jeweils an ihrem zur anderen Profilelementflanke hinweisenden Erstreckungsende mit einer in den senkrecht zur Erstreckungsrichtung der Rille gebildeten Querschnittsebenen mit einer - insbesondere halbkreisförmig - abgerundeten Schnittkontur ausgebildet sind.

Besonders vorteilhaft zur Erzielung einer optimalen Dichtwirkung ist die Ausbildung eines Laufstreifenprofils gemäß den Merkmalen von Anspruch **4,** wobei die Rille mit einem radialen Erstreckungsabschnitt der in radialer Richtung R gemessenen Erstreckungshöhe H₃ ausgebildet ist, in welchem die beiden durch die Profilelementflanken gebildeten Rillenwände in den senkrecht zur Erstreckungsrichtung der Rillen gebildeten Querschnittsebenen parallel erstreckt sind, wobei dieser Erstreckungsabschnitt der schmalste radiale Erstreckungsabschnitt der Rille ist, in welchem die Rillenbreite B konstant mit 2mm ≤ B ≤ 4mm ausgebildet ist, und wobei die beiden Gummirippen innerhalb dieses radialen Erstreckungsabschnitts ausgebildet sind.

Besonders vorteilhaft ist die Ausbildung eines Laufstreifenprofils gemäß den Merkmalen von Anspruch **5,** wobei die Rille mit einem radial äußeren Erstreckungsabschnitt ausgebildet ist, welcher sich nach radial außen bis zur radial äußeren Oberfläche erstreckt, in welchem die Rille längs ihrer radial Erstreckung nach außen hin mit zunehmender Rillenbreite B ausgebildet ist. Hierdurch können durch die größere Öffnung im radial äußeren Abschnitt die Vorteile für gute Nassbremseigenschaften und die guter Abriebsleistung durch geringeres Void im unteren engen Erstreckungsabschnitt optimal kombiniert umgesetzt werden. Die Gummirippen im schmalen Erstreckungsabschnitt überkompensieren dabei die durch die große Rillenöffnung im radial äußeren Erstreckungsabschnitt der Rille bedingten Nachteile für das Steinefangen.

Besonders vorteilhaft ist die Ausbildung eines Laufstreifenprofils gemäß den Merkmalen von Anspruch 6, wobei die Rille eine Umfangsrille ist. Hierdurch werden gerade die für Steinefangen besonders anfälligen Rillen des Fahrzeugreifens mit der Dichtwirkung ausgestattet und somit der Fahrzeugreifen insgesamt besonders geschützt.

Besonders vorteilhaft ist die Ausbildung eines Laufstreifenprofils gemäß den Merkmalen von Anspruch **7,** wobei die die Rille begrenzenden Profilelemente jeweils Teil eines Profilbandes sind, wobei insbesondere die Profilelemente zumindest eines Profilbandes Profilblockelemente einer Profilblockreihe sind.

Besonders vorteilhaft ist die Ausbildung eines Laufstreifenprofils gemäß den Merkmalen von Anspruch **8,** wobei die beiden Gummirippen mit einem Abstand d₁ zueinander mit 1mm ≤ d₁ ≤ 3mm ausgebildet sind. Durch diese Ausbildung ist der Abstand ausreichend groß, um Kontakt zwischen den Gummirippen und hierdurch bedingte Beschädigungen oder Abrieb zu vermeiden und ausreichend klein um eine gute Dichtwirkung der Labyrinth-Dichtung sicherszustellen und ein eindringen von Steinen zu vermeiden. Besonders vorteilhaft ist die Ausbildung eines Laufstreifenprofils gemäß den Merkmalen von Anspruch **9,** wobei die jede der beiden Gummirippen jeweils mit ihrem von ihrer Profilelementflanke wegweisenden Erstreckungsende mit einem Abstand d₂ zur anderen Profilelementflanke ausgebildet ist mit 1mm ≤ d₂ ≤ 2mm ausgebildet sind. Durch diese Ausbildung kann in einfacher Weise ein für sicheres Schließen der Labyrinth-Dichtung ausreichend kleiner Abstand zwischen den Gummirippen sichergestellt werden ohne die Formhaltbarkeit und Entformungsfähigkeit zu beeinträchtigen.

Besonders vorteilhaft ist die Ausbildung eines Laufstreifenprofils gemäß den Merkmalen von Anspruch **10,** wobei die Gummirippe mit einer in radialer Richtung R des Reifens gemessenen Erstreckungsbreite h mit 1,5mm ≤ h ≤ 3mm ausgebildet. Die Erstreckungsbreite h ist dabei ausreichend groß, um ausreichenden Widerstand gegen unerwünschtes Abreiben durch bis zur Gummirippe eindringende Steine bereitzustellen ohne dabei die Rille so stark mit Gummimaterial zu füllen, dass die Nassbremseigenschaften unerwünscht beeinträchtigt werden.

Besonders vorteilhaft ist die Ausbildung eines Laufstreifenprofils gemäß den Merkmalen von Anspruch **11,** wobei das Paar von Gummirippen bei konstant zueinander ausgebildetem Abstand d₁ längs der Erstreckung der Rille mit - insbesondere wellenförmig - verändertem Verlauf der radialen Position ausgebildet ist. Somit kann verhindert werden, dass bei Abrieb des Fahrzeugreifens bis Erreichen einer Gummirippe schlagartig Nässeeigenschaften geändert werden.

Die Erfindung wird im Folgenden anhand der in den Figuren 1 bis 9 dargestellten Ausführungsbeispiele näher erläutert. Hierin zeigen
- Fig.1: einen Umfangsabschnitt eines Laufstreifenprofils eines Fahrzeugreifens in Draufsicht,
- Fig.2: eine vergrößerte Detaildarstellung II der Draufsicht von Fig.1,
- Fig.3: das Laufstreifenprofil von Fig.1 in Schnittdarstellung gemäß Schnitt III-III von Fig.1,
- Fig.4: das Laufstreifenprofil von Fig.1 in Schnittdarstellung gemäß Schnitt IV-IV von Fig. 1,
- Fig.5: das Laufstreifenprofil von Fig.1 in Schnittdarstellung gemäß Schnitt V-V von Fig.1,
- Fig.6: eine vergrößerte Detaildarstellung des Details VI-VI von Fig.1,
- Fig.7: das Laufstreifenprofil von Fig.1 in Schnittdarstellung gemäß Schnitt VII-VII von Fig. 1,
- Fig.8: das Laufstreifenprofil von Fig.1 in Schnittdarstellung gemäß Schnitt VIII-VIII von Fig.1 und
- Fig.9: vergrößerte Perspektivendarstellung des Abschnittes des Laufstreifenprofils von Fig. 1 mit alternativer Ausbildung der Gummirippen einer Umfangsrille.

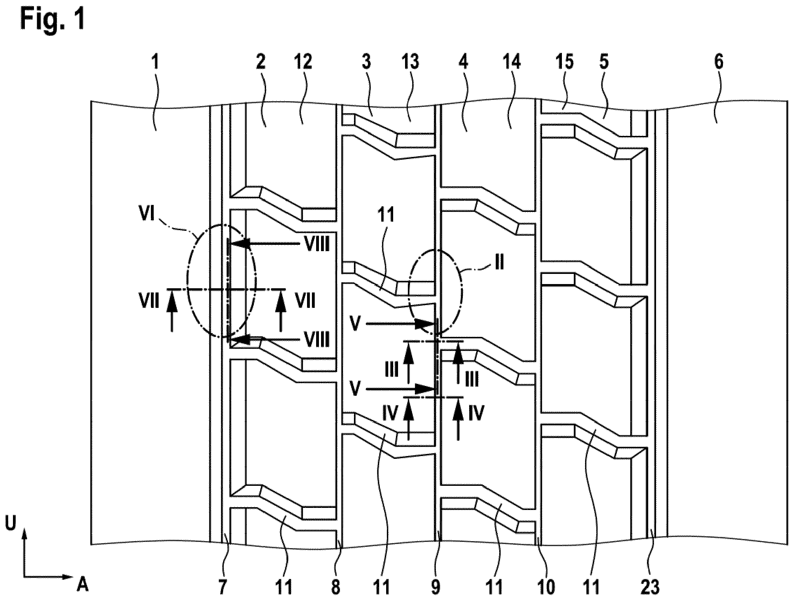

Die Figuren 1 bis 8 zeigen ein Laufstreifenprofil des Fahrzeugluftreifens eines Nutzfahrzeuges. Das Laufstreifenprofil ist - wie in Fig.1 dargestellt ist - mit den in axialer Richtung A des Fahrzeugluftreifens nebeneinander angeordneten und jeweils durch Umfangsrillen 7, 8, 9, 10, 23 voneinander beabstandeten und über den gesamten Umfang des Fahrzeugluftreifen erstreckten Umfangsrippen 1, 6 und Profilblockreihen 2, 3, 4, 5 ausgebildet. Die beiden Umfangsrippen 1 und 6 sind dabei in den beiden Reifenschultern ausgebildet und bilden somit die Profilbänder der Reifenschultern. In axialer Richtung A zwischen den beiden Umfangsrippen 1 und 6 sind die Profilblockreihen 2, 3,4 und 5 ausgebildet, die die mittleren Profilbänder bilden.

Wie in Fig.1 dargestellt ist, ist dabei die Profilblockreihe 2 in axialer Richtung A von der Umfangsrippe 1 durch die Umfangsrille 7 getrennt. Die Profilblockreihe 2 und die Profilblockreihe 3 sind in axialer Richtung A voneinander durch die Umfangsrille 8 getrennt. Die Profilblockreihe 3 und die Profilblockreihe 4 sind in axialer Richtung A durch die Umfangsrille 9 voneinander getrennt. Die Profilblockreihe 4 und die Profilblockreihe 5 sind in axialer Richtung A durch die Umfangsrille 10 voneinander getrennt. Die Profilblockreihe 5 und die Umfangsrippe 6 sind in axialer Richtung A durch die Umfangsrille 23 voneinander getrennt.

Die Profilblockreihen 2, 3, 4 und 5 sind dabei jeweils in bekannter Weise aus über den Umfang des Fahrzeugluftreifens hintereinander angeordneten Profilblockelementen ausgebildet, welche jeweils durch Querrillen 11 voneinander getrennt sind.

Dabei ist die Profilblockreihe 2 aus über den Umfang des Fahrzeugluftreifens in Umfangsrichtung U hintereinander angeordneten Profilblockelementen 12 ausgebildet, welche durch Querrillen 11 voneinander getrennt sind. Die Profilblockreihe 3 ist aus über den Umfang des Fahrzeugluftreifens in Umfangsrichtung U hintereinander angeordneten Profilblockelementen 13 ausgebildet, welche durch Querrillen 11 voneinander getrennt sind. Die Profilblockreihe 4 ist aus über den Umfang des Fahrzeugluftreifens in Umfangsrichtung U hintereinander angeordneten Profilblockelementen 14 ausgebildet, welche jeweils durch Querrillen 11 voneinander getrennt sind. Die Profilblockreihe 5 ist aus über den Umfang des Fahrzeugluftreifens in Umfangsrichtung U hintereinander angeordneten Profilblockelementen 15 ausgebildet, welche durch Querrillen 11 voneinander getrennt sind.

Die Querrillen 11 der Profilblockreihe 2 erstrecken sich dabei ausgehend von der Umfangsrille 7 durch die Profilblockreihe 2 hindurch bis zur Umfangsrille 8. Die Querrillen 11 der Profilblockreihe 3 erstrecken sich ausgehend von der Umfangsrille 8 durch die Profilblockreihe 3 hindurch bis zur Umfangsrille 9. Die Querrillen 11 der Profilblockreihe 4 erstrecken sich ausgehend von der Umfangsrille 9 durch die Profilblockreihe 4 hin durch bis zur Umfangsrille 10. Die Querrillen 11 der Profilblockreihe 5 erstrecken sich ausgehend von der Umfangsrille 10 durch die Profilblockreihe 5 hindurch bis zur Umfangsrille 23.

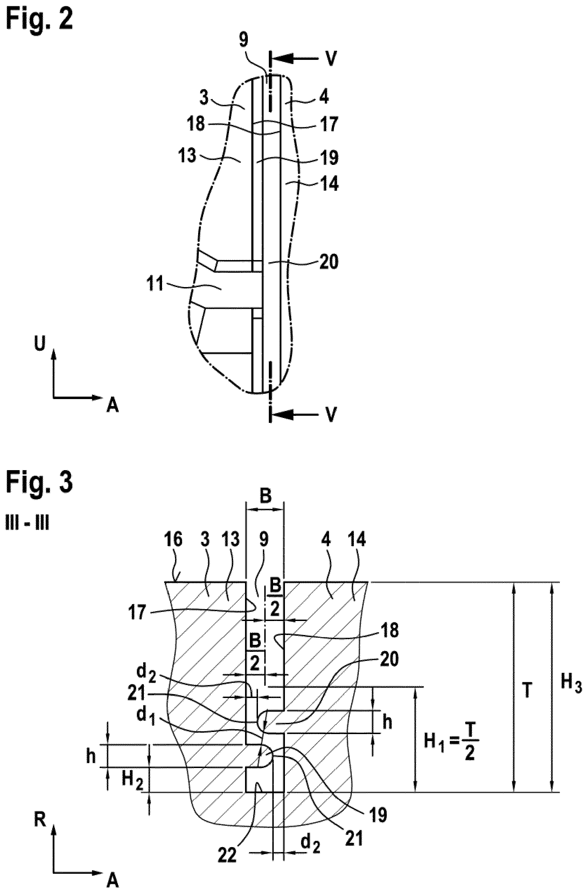

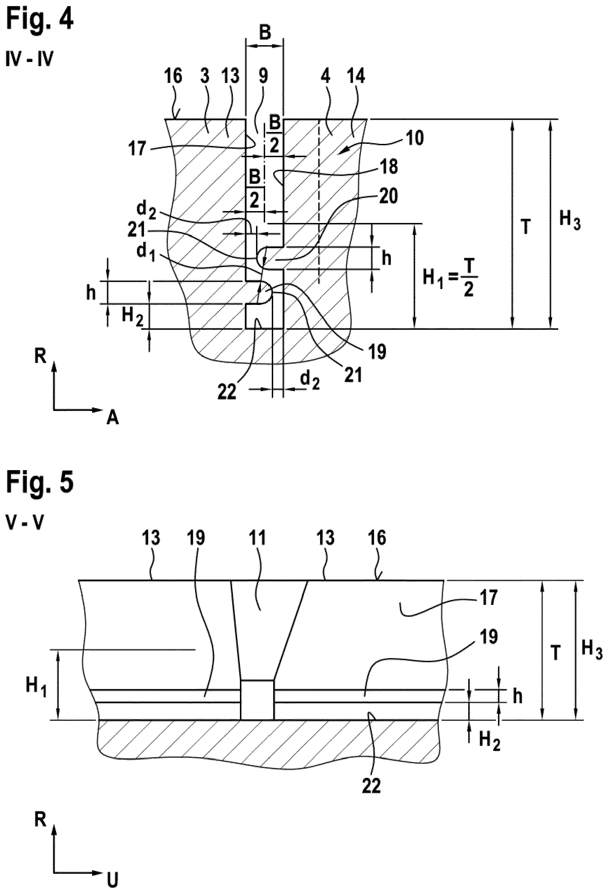

Die Umfangsrippen 1 und 6 sowie die Profilblockelemente 12, 13, 14 und 15 der Profilblockreihen 2, 3, 4 und 5 sind - wie am Beispiel der Profilblockelemente 13 und 14 in Fig.3 und Fig. 4 dargestellt ist - in radialer Richtung R des Fahrzeugluftreifens nach außen hin durch eine die Straßenkontaktoberfläche bildende radial äußere Oberfläche 16 begrenzt.

Die Querrillen 11 sowie die Umfangsrillen 7, 8, 9, 10 und 23 sind in radialer Richtung R nach innen hin in bekannter Weise jeweils durch einen Rillengrund 22 begrenzt und beiderseits des Rillengrundes 22 jeweils durch eine Rillenwand, welche sich ausgehend vom Rillengrund 22 bis zur radial äußeren Oberfläche 16 in radialer Richtung R nach außen hin erstreckt und dabei die jeweilige zur Quer- bzw. Umfangsrille hinweisenden Flanke des durch die Quer- bzw. Umfangsrille begrenzten Profilelementes bildet.

Wie in Fig. 2 und 3 am Beispiel der Umfangsrille 9 dargestellt ist, sind die Umfangsrillen 6, 7, 8, 9, 10 dabei beiderseits des Rillengrundes 22 mit Rillenwänden 17 und 18 begrenzt, welche sich ausgehend vom Rillengrund 22 in radialer Richtung R des Fahrzeugluftreifens nach außen hin bis zur radial äußeren Oberfläche 16 erstrecken und dort enden. Am Beispiel der Umfangsrille 9 bildet die Rillenwand 17 jeweils die Flanken der Profilblockelemente 13 der durch die Umfangsrille 9 begrenzten Profilblockreihe 3 und die Rillenwand 18 die Flanken der Profilblockelemente 14 der zur anderen Seite hin von der Umfangsrille 9 begrenzten Profilblockreihe 4.

Die Umfangsrille 9 ist dabei mit einer ausgehend von der radial äußeren Oberfläche 16 der durch die Umfangsrille 9 begrenzten Profilblockelemente 13 und 14 in radialer Richtung R nach innen hin bis zum tiefsten Punkt des Rillengrundes 22 gemessenen Rillentiefe T ausgebildet, welche der Profiltiefe entspricht.

In den Figuren 2 bis 5 ist die Ausbildung einer erfindungsgemäßen Umfangsrille am Beispiel einer Umfangsrille 9 dargestellt und erläutert, welche eine Profilblockreihe 3 von einer Profilblockreihe 4 trennt.

Die Rillenwände 17 und 18 sind in den Querschnittebenen, welche senkrecht zur Haupterstreckungsrichtung der Umfangsrille 9 gebildet werden und bei Umfangsrillen diejenigen Schnittebenen sind, welche die Reifenachse beinhalten, längs eines radialen Erstreckungsabschnitt der in radialer Richtung R gemessenen Erstreckungshöhe H₃ mit parallel zueinander verlaufenden Schnittkonturen ausgebildet. Die Rillenwände 17 und 18 sind in diesem Erstreckungsabschnitt der Erstreckungshöhe H₃ mit einem Abstand B zueinander ausgebildet, welcher die Rillenbreite in diesem Erstreckungsabschnitt bildet. Der Erstreckungsabschnitt der Erstreckungshöhe H₃ ist dabei mit einer Breite B ausgebildet, welche zwischen 2mm ≤ B ≤ 4 mm beträgt.

Im dargestellten Ausführungsbeispiel der Figuren 3 und 4 ist H₃ = T gewählt.

Wie in den Figuren 3 und 4 dargestellt ist, ist innerhalb eines radialen Erstreckungsabschnittes der Höhe H₁ = T/2, welche ausgehend vom Rillengrund 22 nach radial außen gemessen wird, in der Rillenwand 17, welche die Profilblockelementreihe 13 begrenzt, eine über den gesamten Umfang des Fahrzeugluftreifens erstreckte Gummirippe 19 ausgebildet, welche sich ausgehend von der Rillenwand 17 in Richtung zur Rillenwand 18 in die Umfangsrille 9 hinein erhebt und sich dabei mit ihrer Erhebung in axialer Richtung A des Fahrzeugluftreifens bis über die Hälfte der Rillenbreite und somit über eine Position im Abstand B/2 von der Rillenwand 17 hinweg erstreckt und dort mit ihrem zur Rillenwand 18 weisenden Erstreckungsende 21 im Abstand d₂ von der Rillenwand 18 endet. In analoger Weise ist innerhalb dieses radialen Erstreckungsabschnittes der Höhe H₁ = T/2, welche ausgehend vom Rillengrund 22 nach radial außen gemessen wird, in der Rillenwand 18, welche die Profilblockelementreihe 14 begrenzt, eine über den gesamten Umfang des Fahrzeugluftreifens erstreckte Gummirippe 20 ausgebildet, welche sich ausgehend von der Rillenwand 18 in Richtung zur Rillenwand 17 in die Umfangsrille 9 hinein erhebt und sich dabei mit ihrer Erhebung in axialer Richtung A des Fahrzeugluftreifens bis über die Hälfte der Rillenbreite und somit über eine Position im Abstand B/2 von der Rillenwand 18 hinweg erstreckt und dort mit ihrem zur Rillenwand 17 weisenden Erstreckungsende 21 im Abstand d₂ von der Rillenwand 17 endet. Die Gummirippen 19 und 20 erstrecken sich dabei längs der gesamten Erstreckung der Umfangsrille 9 mit ihrer Haupterstreckungsrichtung in Umfangsrichtung U des Fahrzeugreifen. Die Gummirippe 19 erstreckt sich dabei jeweils längs der gesamten Erstreckung der durch die Rillenwand 17 gebildeten Profilblockelementflanke eines Profilblockelementes 13. Die Gummirippe 20 erstreckt sich dabei jeweils längs der gesamten Erstreckung der durch die Rillenwand 18 gebildeten Profilblockelementflanke eines Profilblockelementes 14. Der Abstand d₂ ist mit d₂ < B/2 ausgebildet.

Beide Gummirippen 19 bzw. 20 sind längs ihrer gesamten Erstreckung in Umfangsrichtung U des Fahrzeugluftreifens jeweils mit einer in radialer Richtung R des Fahrzeugluftreifens gemessenen Rippenbreite h ausgebildet. Die Rippenbreite h der Gummirippe 19 ist in der Rillenwand 17 mit ihrem Maximalwert ausgebildet. Die Rippenbreite h der Gummirippe 20 ist in der Rillenwand 18 mit ihrem Maximalwert ausgebildet.

Die beiden in der Umfangsrille 9 ausgebildeten Gummirippen 19 und 20 sind in radialer Richtung R des Fahrzeugluftreifens versetzt zueinander positioniert. So ist - wie in den Figuren 3 und 4 dargestellt - die Gummirippe 20 in radialer Richtung R des Fahrzeugluftreifens außerhalb der Position der Gummirippe 19 positioniert, wobei die beiden Gummirippen 19 und 20 derart versetzt zueinander positioniert sind, dass sie trotz axialer Überlappung ihrer Erstreckungsenden im Bereich der Mitte der Rillenbreite mit einem Abstand d₁ zueinander positioniert sind. Wie in Fig. 3 und 4 dargestellt ist, ist die näher zum Rillengrund 22 positionierte Gummirippe 19 dabei in einem in radialer Richtung R des Fahrzeugluftreifens gemessenen Abstand H₂ vom Rillengrund 22 positioniert, wobei der Abstand H₂ in der Rillenwand 17 gemessen wird.

Die Erstreckungsbreite h der Gummirippen 19, 20 ist mit 1,5mm ≤ h ≤ 3mm gewählt ausgebildet. Der Abstand d₁ zwischen den benachbarten Gummirippen 19, 20 ist mit 1mm ≤ d₁ ≤ 3mm gewählt ausgebildet. Der Abstand d₂ zwischen der Gummirippe 19 bzw. 20 und der jeweils gegenüber liegenden Rillenwand 18 bzw. 17 ist mit 1mm ≤ d₂ < 2 mm ausgebildet.

Die Erstreckungshöhe H₁ ist mit H₁ ≤ T/2 ausgebildet. Die Erstreckungshöhe H₂ ist mit H₂ ≥ 3mm ausgebildet. Im dargestellten Ausführungsbeispiel ist H₂ = 3mm gewählt.

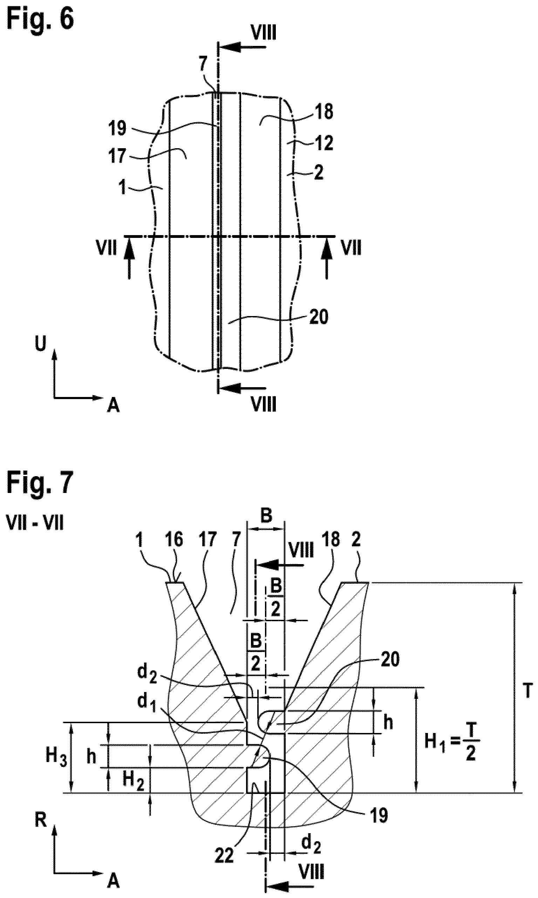

In den Figuren 6 bis 8 ist die Ausbildung einer erfindungsgemäßen Umfangsrille am Beispiel einer Umfangsrille 7 dargestellt und erläutert, welche eine in der einen Reifenschulter ausgebildete Umfangsrippe 1 von der Profilblockreihe 2 trennt. Wie den Figuren 6 bis 8 entnommen werden kann, sind auch bei diesem Ausführungsbeispiel die Umfangsrille 7 mit einer Rillentiefe T ausgebildet. Ebenso sind bei dieser Ausbildung innerhalb eines in radialer Richtung R ausgehend vom Rillengrund 22 gemessenen Erstreckungsabschnitts der Erstreckungshöhe H₃ die beiden Rillenwände 17 und 18 in den Schnittebenen senkrecht zur Haupterstreckungsrichtung der Umfangsrille 7 mit in konstantem Abstand parallel zueinander ausgerichtetem Schnittkonturverlauf der Rillenwände 17 und 18 und somit mit einer im wesentlichen konstanten Rillenbreite B ausgebildet ist. Im dargestellten Ausführungsbeispiel ist die Erstreckungshöhe H₃ mit H₃ < T ausgebildet. Radial außerhalb des Erstreckungsabschnitt der Erstreckungshöhe H₃ ist die Umfangsrille 7 längs der radialen Erstreckung der Umfangsrille 7 bis zur radial äußeren Oberfläche 16 der angrenzenden Umfangsrippe 1 und der angrenzenden Profilblockreihe 2 mit kontinuierlich zunehmender Rillenbreite B ausgebildet.

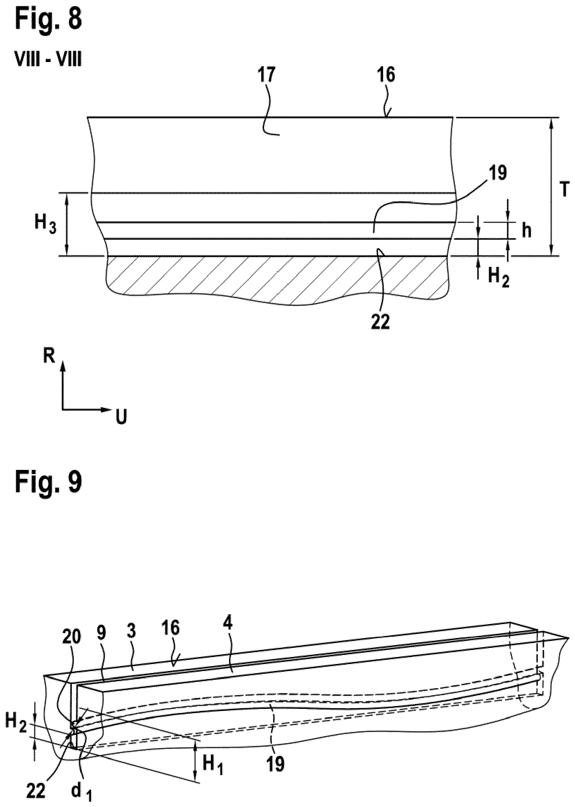

Wie in den Figuren 7 und 8 zu erkennen ist, sind innerhalb des Erstreckungsabschnitts der Erstreckungshöhe H₁ und innerhalb des Erstreckungsabschnitt der Erstreckungshöhe H₃ in analoger Weise in der Rillenwand 17 eine Gummirippe 19 und in der Rillenwand 18 eine Gummirippe 20 ausgebildet, welche - wie bereits im Zusammenhang mit den anderen Ausführungsbeispielen angegeben - mit der Rippenbreite h, mit Abstand d₁ zueinander und mit Abstand d₂ zur jeweils gegenüber liegenden Rillenwand ausgebildet sind. Die näher zum Rillengrund 22 hin angeordnete Gummirippe 19 ist in radialer Richtung R des Fahrzeugluftreifens gemessenem Abstand H₂ zum Rillengrund 22 angeordnet. Wie in Fig. 7 zu erkennen ist, ist dabei die radial äußere Gummirippe 20 mit mindestens der Hälfte ihrer in radialer Richtung R gemessenen Rippenbreite h noch innerhalb der Erstreckungsabschnittes der Erstreckungshöhe H₃ ausgebildet.

In den oben dargestellten Ausführungsbeispielen sind die Gummirippen 19 und 20 jeweils längs ihrer gesamten Erstreckung über den Umfang des Fahrzeugluftreifens hinweg in gleichbleibender radialer Position des Reifens ausgebildet mit in radialer Richtung ausgebildeten Rippenbreite h, mit ihrem Abstand d₁ zueinander und mit Abstand d₂ zur jeweils gegenüberliegenden Rillenwand.

In Fig.9 ist am Beispiel einer Umfangsrille 9 eine alternative Ausbildung der Gummirippen 19 und 20 dargestellt. Dabei sind die Gummirippen 19 und 20 auch in dieser Ausbildung längs ihrer gesamten Erstreckungsrichtung über den Umfang des Fahrzeugluftreifens mit konstantem Abstand d₁ zueinander, mit konstanter in radialer Richtung R gemessenen Rippenbreite h in der Rillenwand, mit konstantem Abstand d₂ zur gegenüberliegenden Rillenwand, mit Mindestabstand H₂ zum Rillengrund 22 und innerhalb des Erstreckungsabschnittes der Erstreckungshöhe H₁ und innerhalb des Erstreckungsabschnittes der Erstreckungshöhe H₃ ausgebildet. Allerdings verändert sich bei dieser Ausbildung die radiale Position der Gummirippen 20 und 19 längs ihrer Erstreckung über den gesamten Umfang des Fahrzeugluftreifens hinweg. Im dargestellten Ausführungsbeispiel ist, wie in Fig.9 zu erkennen ist, dieses Paar von übereinander angeordneten Gummirippen 19 und 20 dabei mit einem längs der Erstreckung des Fahrzeugreifens wellenförmig verlaufendem Verlauf ihrer radialen Positionierung ausgebildet.

### Bezugszeichenliste

### (Teil der Beschreibung)

- 1: Umfangsrippe
- 2: Blockreihe
- 3: Blockreihe
- 4: Blockreihe
- 5: Blockreihe
- 6: Umfangsrippe
- 7: Umfangsrille
- 8: Umfangsrille
- 9: Umfangsrille
- 10: Umfangsrille
- 11: Querrille
- 12: Profilblockelement
- 13: Profilblockelement
- 14: Profilblockelement
- 15: Profilblockelement
- 16: Radial äußere Oberfläche
- 17: Rillenwand
- 18: Rillenwand
- 19: Rippe
- 20: Rippe
- 21: Erstreckungsende
- 22: Rillengrund

## Patentansprüche

1. Laufstreifenprofil eines Fahrzeugreifens mit durch Rillen (7,8,9,10,23) voneinander getrennten Profilelementen (1,12,13,14,15,6), wobei die durch eine Rille (9,7) getrennten Profilelemente (13,14,1,12) in radialer Richtung R nach außen hin durch eine, die Bodenkontaktfläche bildende radial äußere Oberfläche (16) und zur Rille (9,7) hin jeweils durch eine eine Rillenwand (17,18) bildende Profileelementflanke begrenzt werden und wobei die Rillen (9,7) in radialer Richtung R nach innen hin durch einen Rillengrund (22) und beiderseits des Rillengrundes (22) jeweils durch eine Rillenwand (17,18) begrenzt wird, welche sich in radialer Richtung R ausgehend vom Rillengrund (22) bis zur radial äußeren Oberfläche (16) des von ihr begrenzten Profilelementes (13,14,1,12) erstreckt,
wobei in den die Rille (9,7) begrenzenden, jeweils eine andere Rillenwand (17,18) der Rille (9,7) bildenden Profilelementflanken jeweils eine in Erstreckungsrichtung der Rille (9,7) erstreckte Gummirippe (20,19) ausgebildet ist,
**wobei die in der einen Rillenwand (17) gebildete Gummirippe (19) in anderer radialer Position des Fahrzeugreifens ausgebildet ist als die in der anderen Rillenwand (18) ausgebildete Gummirippe (20),**
**dadurch gekennzeichnet,**
**dass** die beiden Gummirippen (19,20) sich jeweils über die gesamte Erstreckungslänge der Profilelementflanke erstrecken und wobei jede dieser beiden Gummirippen(19,20) jeweils längs ihrer gesamten Erstreckungslänge von derjenigen Profilelementflanke, in welcher sie ausgebildet ist, in die Rille (9,7) hinein in Richtung zur anderen Profilelementflanke bis mindestens zur Mitte der Rillenbreite in dieser radialen Position der Rille (9,7) erstreckt und dort in der Rille (9,7) mit Abstand d₂ zu den Profilelementflanken endet **und**
**dass die Rille (9,7) mit einer in radialer Richtung R ausgehend vom Rillengrund (22) bis zur radial äußeren Oberfläche (16) der angrenzenden Profilelemente (13,14,1,12) gemessenen Rillentiefe T ausgebildet ist und die beiden Gummirippen (19,20) innerhalb eines ausgehend vom Rillengrund (22) nach radial außen hin gemessenen radialen Erstreckungsbereiches der Erstreckungshöhe H₁ =T/2 ausgebildet sind.**

2. Laufstreifenprofil gemäß den Merkmalen von Anspruch 1,
wobei die beiden Gummirippen (19,20) jeweils in einer radialen Position außerhalb einer ausgehend vom Rillengrund (22) nach radial außen hin gemessenen Höhe H₂ = 3mm ausgebildet sind.

3. Laufstreifenprofil gemäß den Merkmalen von einem oder mehreren der vorangegangenen Ansprüche,
wobei die beiden Gummirippen (19,20) jeweils an ihrem zur anderen Profilelementflanke hinweisenden Erstreckungsende (21) mit einer in den senkrecht zur Erstreckungsrichtung der Rille (9,7) gebildeten Querschnittsebenen mit einer - insbesondere halbkreisförmig - abgerundeten Schnittkontur ausgebildet sind.

4. Laufstreifenprofil gemäß den Merkmalen von einem oder mehreren der vorangegangenen Ansprüche,
wobei die Rille (9,7) mit einem radialen Erstreckungsabschnitt der in radialer Richtung R gemessenen Erstreckungshöhe H₃ ausgebildet ist, in welchem die beiden durch die Profilelementflanken gebildeten Rillenwände (17,18) in den senkrecht zur Erstreckungsrichtung der Rillen (9,7) gebildeten Querschnittsebenen parallel erstreckt sind, wobei dieser Erstreckungsabschnitt der schmalste radiale Erstreckungsabschnitt der Rille (9,7) ist, in welchem die Rillenbreite B konstant mit 2mm ≤ B ≤ 4mm ausgebildet ist, und wobei die beiden Gummirippen (19,20) innerhalb dieses radialen Erstreckungsabschnitts ausgebildet sind.

5. Laufstreifenprofil gemäß den Merkmalen von Anspruch **4,**
wobei die Rille (9,7) mit einem radial äußeren Erstreckungsabschnitt ausgebildet ist, welcher sich nach radial außen bis zur radial äußeren Oberfläche (16) erstreckt, in welchem die Rille längs ihrer radial Erstreckung nach außen hin mit zunehmender Rillenbreite B ausgebildet ist.

6. Laufstreifenprofil gemäß den Merkmalen von einem oder mehreren der vorangegangenen Ansprüche,
wobei die Rille (9,7) eine Umfangsrille ist.

7. Laufstreifenprofil gemäß den Merkmalen von einem oder mehreren der vorangegangenen Ansprüche,
wobei die die Rille (9,7) begrenzenden Profilelemente (13,14,1,12) jeweils Teil eines Profilbandes sind, wobei insbesondere die Profilelemente (13,14,12) zumindest eines Profilbandes Profilblockelemente einer Profilblockreihe (3,4,2) sind.

8. Laufstreifenprofil gemäß den Merkmalen von einem oder mehreren der vorangegangenen Ansprüche,
wobei die beiden Gummirippen (19,20) mit einem Abstand d₁ zueinander mit 1mm ≤ d₁ ≤ 3mm ausgebildet sind.

9. Laufstreifenprofil gemäß den Merkmalen von einem oder mehreren der vorangegangenen Ansprüche,
wobei jede der beiden Gummirippen (19,20) jeweils mit ihrem von ihrer Profilelementflanke wegweisenden Erstreckungsende (21) mit einem Abstand d₂ zur anderen Profilelementflanke mit 1mm ≤ d₂ ≤ 2mm ausgebildet ist.

10. Laufstreifenprofil gemäß den Merkmalen von einem oder mehreren der vorangegangenen Ansprüche,
wobei die Gummirippe (19,20) mit einer in radialer Richtung R des Reifens gemessenen Erstreckungsbreite h mit 1,5mm ≤ h ≤ 3mm ausgebildet.

11. Laufstreifenprofil gemäß den Merkmalen von einem oder mehreren der vorangegangenen Ansprüche,
wobei das Paar von Gummirippen (19,20) bei konstant zueinander ausgebildetem Abstand d₁ längs der Erstreckung der Rille (9,7) mit - insbesondere wellenförmig - verändertem Verlauf der radialen Position ausgebildet ist.

## Claims

1. Tread profile of a vehicle tire with profile elements (1,12,13,14,15,6) separated from one another by grooves (7,8,9,10, 23), wherein the profile elements (13,14,1,12) separated by a groove (9,7) are outwardly delimited in the radial direction R by a radially outer surface (16) forming the ground contact area and toward the groove (9,7) respectively by a profile element flank forming a groove wall (17,18), and wherein the grooves (9,7) are inwardly delimited in the radial direction R by a groove base (22) and on both sides of the groove base (22) respectively by a groove wall (17,18) which extends in the radial direction R starting from the groove base (22) to the radially outer surface (16) of the profile element (13,14,1,12) delimited by it,
wherein a rubber rib (20,19) extending in the extension direction of the groove (9,7) is respectively formed in the profile element flanks which delimit the groove (9,7) and each form another groove wall (17,18) of the groove (9,7),
**wherein the rubber rib (19) formed in one groove wall (17) is formed in a different radial position of the vehicle tire than the rubber rib (20) formed in the other groove wall (18),**
**characterized**
**in that** the two rubber ribs (19,20) each extend over the entire extension length of the profile element flank and wherein each of these two rubber ribs (19,20) respectively extends along its entire extension length from that profile element flank in which it is formed into the groove (9,7) in the direction of the other profile element flank up to at least the middle of the groove width in this radial position of the groove (9,7) and ends there in the groove (9,7) at a distance d₂ from the profile element flanks, **and**
**in that the groove (9,7) is formed with a groove depth T measured in the radial direction R, starting from the groove base (22) to the radially outer surface (16) of the adjacent profile elements (13,14,1,12), and the two rubber ribs (19,20) are formed within a radial extension range of the extension height H₁ =T/2 measured radially outward starting from the groove base (22).**

2. Tread profile according to the features of Claim 1,
wherein the two rubber ribs (19, 20) are each formed in a radial position outside of a height H₂ = 3mm measured radially outward starting from the groove base (22).

3. Tread profile according to the features of one or more of the preceding claims,
wherein the two rubber ribs (19,20) are each formed at their extension end (21) pointing to the other profile element flank in the cross-sectional planes formed perpendicular to the extension direction of the groove (9,7) with a - in particular semicircular - rounded sectional contour.

4. Tread profile according to the features of one or more of the preceding claims,
wherein the groove (9,7) is formed with a radial extension section of the extension height H₃ measured in the radial direction R, in which the two groove walls (17,18) formed by the profile element flanks extend parallel in the cross-sectional planes formed perpendicular to the extension direction of the grooves (9,7), wherein this extension section is the narrowest radial extension section of the groove (9,7) in which the groove width B is made constant with 2mm ≤ B ≤ 4mm, and wherein the two rubber ribs (19,20) are formed inside this radial extension section.

5. Tread profile according to the features of claim **4,**
wherein the groove (9,7) is formed with a radially outer extension section which extends radially outward to the radially outer surface (16), in which the groove is formed along its radially outward extension with increasing groove width B.

6. Tread profile according to the features of one or more of the preceding claims,
wherein the groove (9,7) is a circumferential groove.

7. Tread profile according to the features of one or more of the preceding claims,
wherein the profile elements (13,14,1,12) delimiting the groove (9,7) are each part of a profile strip, wherein in particular the profile elements (13,14,12) of at least one profile strip are profile block elements of a profile block row (3,4,2).

8. Tread profile according to the features of one or more of the preceding claims,
wherein the two rubber ribs (19,20) are formed at a distance d₁ from each other with 1mm ≤ d₁ ≤ 3mm.

9. Tread profile according to the features of one or more of the preceding claims,
wherein each of the two rubber ribs (19,20) is respectively formed with its extension end (21) pointing away from its profile element flank at a distance d₂ from the other profile element flank with 1 mm ≤ d₂ ≤ 2mm.

10. Tread profile according to the features of one or more of the preceding claims,
wherein the rubber rib (19,20) is formed with an extension width h measured in the radial direction R of the tire with 1.5mm ≤ h ≤ 3mm.

11. Tread profile according to the features of one or more of the preceding claims,
wherein the pair of rubber ribs (19,20) is formed, at a constant distance d₁ from one another along the extension of the groove (9,7), with - in particular wavy - changed profile of the radial position.

## Revendications

1. Profil de bande de roulement d'un pneu de véhicule avec des éléments de profil (1, 12, 13, 14, 15, 6) séparés les uns des autres par des rainures (7, 8, 9, 10, 23), les éléments de profil (13, 14, 1, 12) séparés par une rainure (9, 7) étant délimités dans la direction radiale R vers l'extérieur par une surface radialement extérieure (16) formant la surface de contact avec le sol et vers la rainure (9, 7) respectivement par un flanc d'élément de profil formant une paroi de rainure (17, 18) et les rainures (9, 7) étant délimitées dans la direction radiale R vers l'intérieur par un fond de rainure (22) et des deux côtés du fond de rainure (22) respectivement par une paroi de rainure (17, 18) qui s'étend dans la direction radiale R en partant du fond de rainure (22) jusqu'à la surface radialement extérieure (16) de l'élément de profil (13, 14, 1, 12) qu'elle délimite,
une nervure en caoutchouc (20, 19) s'étendant dans la direction d'extension de la rainure (9, 7) étant réalisée respectivement dans les flancs d'élément de profil délimitant la rainure (9, 7), formant respectivement une autre paroi de rainure (17, 18) de la rainure (9, 7),
**la nervure en caoutchouc (19) formée dans l'une des parois de rainure (17) étant réalisée dans une position radiale du pneu du véhicule différente de celle de la nervure en caoutchouc (20) réalisée dans l'autre paroi de rainure (18),**
**caractérisé en ce que**
les deux nervures en caoutchouc (19, 20) s'étendent respectivement sur toute la longueur d'extension du flanc d'élément de profil et chacune de ces deux nervures en caoutchouc (19, 20) s'étendent respectivement sur toute sa longueur d'extension à partir du flanc d'élément de profil dans lequel elle est réalisée, dans la rainure (9, 7) en direction de l'autre flanc d'élément de profil jusqu'au moins au milieu de la largeur de rainure dans cette position radiale de la rainure (9, 7) et se terminant à cet endroit dans la rainure (9, 7) à une distance d₂ des flancs de l'élément de profil, **et**
**en ce que la rainure (9, 7) est réalisée avec une profondeur de rainure T mesurée dans la direction radiale R en partant du fond de rainure (22) jusqu'à la surface radialement extérieure (16) des éléments de profil adjacents (13, 14, 1, 12) et les deux nervures en caoutchouc (19, 20) sont réalisées à l'intérieur d'une zone d'extension radiale de hauteur d'extension H₁ =T/2 mesurée en partant du fond de rainure (22) vers l'extérieur radialement.**

2. Profil de bande de roulement selon les caractéristiques de la revendication 1,
dans lequel les deux nervures en caoutchouc (19, 20) sont réalisées respectivement dans une position radiale à l'extérieur d'une hauteur H₂ = 3 mm mesurée vers l'extérieur radialement à partir du fond de rainure (22).

3. Profil de bande de roulement selon les caractéristiques d'une ou plusieurs des revendications précédentes,
dans lequel les deux nervures en caoutchouc (19, 20) sont réalisées respectivement à leur extrémité d'extension (21) orientée vers l'autre flanc d'élément de profil avec un contour de coupe arrondi - notamment en forme de demi-cercle - dans les plans de section transversale formés perpendiculairement à la direction d'extension de la rainure (9, 7).

4. Profil de bande de roulement selon les caractéristiques d'une ou plusieurs des revendications précédentes,
dans lequel la rainure (9, 7) est réalisée avec une section d'extension radiale de hauteur d'extension H₃ mesurée dans la direction radiale R, dans laquelle les deux parois de rainure (17, 18) formées par les flancs d'élément de profil s'étendent parallèlement dans les plans de section transversale formés perpendiculairement à la direction d'extension des rainures (9, 7), dans lequel cette section d'extension est la section d'extension radiale la plus étroite de la rainure (9, 7), dans laquelle la largeur de rainure B est réalisée de manière constante avec 2 mm ≤ B ≤ 4 mm, et dans lequel les deux nervures en caoutchouc (19, 20) sont réalisées à l'intérieur de cette section d'extension radiale.

5. Profil de bande de roulement selon les caractéristiques de la revendication **4,**
dans lequel la rainure (9, 7) est réalisée avec une section d'extension radialement extérieure qui s'étend de radialement vers l'extérieur jusqu'à la surface radialement extérieure (16), dans laquelle la rainure est réalisée le long de son extension radiale vers l'extérieur avec une largeur de rainure B croissante.

6. Profil de bande de roulement selon les caractéristiques d'une ou plusieurs des revendications précédentes,
dans lequel la rainure (9,7) est une rainure circonférentielle.

7. Profil de bande de roulement selon les caractéristiques d'une ou plusieurs des revendications précédentes,
dans lequel les éléments de profil (13, 14, 1, 12) délimitant la rainure (9, 7) font respectivement partie d'une bande de profil, dans lequel les éléments de profil (13, 14, 12) d'au moins une bande de profil sont notamment des éléments de bloc de profil d'une rangée de blocs de profil (3, 4, 2).

8. Profil de bande de roulement selon les caractéristiques d'une ou plusieurs des revendications précédentes,
dans lequel les deux nervures en caoutchouc (19, 20) sont réalisées avec une distance d₁ entre elles de 1 mm ≤ d₁ ≤ 3 mm.

9. Profil de bande de roulement selon les caractéristiques d'une ou plusieurs des revendications précédentes,
dans lequel chacune des deux nervures en caoutchouc (19, 20) est réalisée respectivement avec son extrémité d'extension (21) s'écartant de son flanc d'élément de profil à une distance d₂ de l'autre flanc d'élément de profil de 1 mm ≤ d₂ ≤ 2 mm.

10. Profil de bande de roulement selon les caractéristiques d'une ou plusieurs des revendications précédentes,
dans lequel la nervure en caoutchouc (19, 20) est réalisée avec une largeur d'extension h, mesurée dans la direction radiale R du pneu, de 1,5 mm ≤ h ≤ 3 mm.

11. Profil de bande de roulement selon les caractéristiques d'une ou plusieurs des revendications précédentes,
dans lequel la paire de nervures en caoutchouc (19, 20) est réalisée avec une distance d₁ constante l'une par rapport à l'autre le long de l'extension de la rainure (9, 7) avec un tracé varié - notamment ondulé - de la position radiale.
